# EUROPEAN PATENT SPECIFICATION

(11) **EP 2 943 017 B1**
(45) Date of publication and mention of the grant of the patent: **21.04.2021**
(21) Application number: 14305679.4
(22) Date of filing: 09.05.2014
(51) Int. Cl.: H04W 28/02, H04W 48/16, H04W 48/02, H04W 48/06

(54) **Control method, access node and computer program product**
Steuerverfahren, Zugangsknoten und Computerprogrammprodukt
Procédé de commande, noeud d'accès et produit de programme informatique

(43) Date of publication of application: 11.11.2015
(73) Proprietor: Alcatel Lucent, 91620 Nozay (FR)
(72) Inventor: Brend, Graham, Swindon, Wiltshire SN5 7DJ (GB); Puddle, Nicola, Swindon, Wiltshire SN5 7DJ (GB); Wong, Shin Horng, Swindon, Wiltshire SN5 7DJ (GB); Warner, George, Swindon, wiltshire SN5 7DJ (GB)
(74) Representative: Greenwood, Matthew David

(56) References cited:
- ERICSSON: "TP on Access Control", 3GPP DRAFT; R2-134524_FS_EDCH_ENH_TP_ON_ACESS_CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, U.S.A.; 20131111 - 20131115 14 November 2013 (2013-11-14), XP050753567, Retrieved from the Internet: URL:http://www.3gpp.org/ftp/tsg_ran/WG2_RL 2/TSGR2_84/Docs/ [retrieved on 2013-11-14]
- ERICSSON ET AL: "Access Group based improvements for Rel-12", 3GPP DRAFT; R2-132655_FS_EDCH_ENH_FURTHER_CONSIDERATIO NS_ACCESS_CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Barcelona, Spain; 20130819 - 20130823 10 August 2013 (2013-08-10), XP050718457, Retrieved from the Internet: URL:http://www.3gpp.org/ftp/tsg_ran/WG2_RL 2/TSGR2_83/Docs/ [retrieved on 2013-08-10]
- ETSI MCC: "Skeleton report", 3GPP DRAFT; UMTS_CHAIR_NOTES_RAN2-85 PRAGUE -FRI_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 14 February 2014 (2014-02-14), XP050754791, Retrieved from the Internet: URL:http://www.3gpp.org/ftp/tsg_ran/WG2_RL 2/TSGR2_85/Report/tmp/ [retrieved on 2014-02-14]
- ALCATEL-LUCENT: "Mobility State Indicator", 3GPP DRAFT; R2-140617 MSE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050737754, Retrieved from the Internet: URL:http://www.3gpp.org/ftp/Meetings_3GPP_ SYNC/RAN/RAN2/Docs/ [retrieved on 2014-02-09]

## Description

### TECHNICAL FIELD

Aspects and embodiments relate, in general, to a user equipment control method for user equipment operating to communicate with a network access node in a wireless communications network, and an access node, computer program product.

### BACKGROUND

Wireless telecommunications systems are known. In such known systems radio coverage is provided to network connectible devices known as user equipment (for example, mobile telephones, smart phones or tablets) in geographical regions. A network access node, such as a base station, is typically located in a geographical region and is typically operable to provide the required radio coverage to network connectible devices within that region. Network connectible devices in the region served by a network access node are typically operable to receive information and data from the network access node and to transmit information and data to the network access node. In known wireless communication systems, network connectible devices can move between geographical regions in which radio coverage is provided by network access nodes. The regions of radio coverage supported by a network access node may be referred to as "cells". In order to facilitate transmission of information and data between a network access node and a network connectible device, it is usual to configure network connectible devices to operate in one of a number of different Radio Resource Control (RRC) connection states. The different connection or communication states (such as cell_DCH, cell_FACH, cell_PCH or URA_PCH states) support different types of transmissions between the network access node and network connectible devices. These different connection or communication states match expected traffic activity associated with a network connectible device. Although existing techniques facilitate transmissions between network access nodes and network connectible devices, difficulties can occur. Accordingly, it is desired to provide a technique for controlling operation of devices within a wireless communication network.

Ericsson: "TP On Access Control", 3gpp Draft; R2-134524_Fs_Edch_Enh_Tp On_Access_Control, 3rd Generation Partnership Project (3gpp), Mobile Competence Centre; 650, Route Des Lucioles ; F-06921 Sophia-Antipolis Cede France Val. Ran Wg2, No. San Francisco, U.S.A.; 20131111 - 20131115 14 November (2013-11-14), describes that UEs can be assigned to Access Groups.

Ericsson Et Al: "Access Group Based Improvements For Rel-12", 3gpp Draft; R2-132655_Fs_Edch_Enh_Further_Considerations_Access_Con-3rd Generation Partnership Project (3gpp), Mobile Competen, Centre; 650, Route Des Lucioles; F-06921 Sophia-Antipolis Cede Val. Ran Wg2, No. Barcelona, Spain; 20130819- 20130823 10 August 2013 (2013-08-10) provides a high level overview of how UEs can be assigned to Access Groups.

### SUMMARY

According to an example, there is provided a user equipment control method as provided in claim 1. The or each operational parameter can be selected according to UE device capability derived using an information element provided by the UE device to the network access node. The said operational parameter can be an access group suitable for managing UE access to the network access node. The predetermined distribution can be used to map the UE to an access group based on network services that the UE can utilise as derived from the device capability. An access stratum release indicator transmitted by the UE can be used to determine services that the UE can utilise. The UE device can be assigned an operational parameter on the basis of a statistical distribution, whereby to evenly distribute UEs across available access groups. A radio measure representing the quality of a radio link between the UE and the access node can be provided or generated, wherein the UE is assigned an operational parameter on the basis of said radio measure. Access to network services for groups of UEs connected to the access node can be managed or otherwise controlled by using the or each operational parameter assigned to a UE to govern access to a network service. Access to a network service can be governed by limiting access to a service to UEs assigned a selected operational parameter. An operational parameter can be reassigned to or for the UE device. Reassigning an operational parameter can include determining whether the UE device has requested setup of a radio access bearer for a channel associated with a service to which the assigned operational parameter relates. Reassigning an operational parameter can include using an information element provided by the UE device or other nodes within the network after attachment to the network to determine a service profile of the UE device.

According to an example, there is provided a network access node in a wireless communications network as provided in claim 10. The network access node can be a radio network controller or a home node B (HNB) or a HNB gateway. The network access node can be operable to reassign one or more operational parameters to or for the UE device. There is provided a computer program product as provided in claim 13.

According to an example, there is provided a computer program product, comprising a computer usable medium having computer readable program code embodied therein, said computer readable program code adapted to be executed to implement a control method as provided herein.

### BRIEF DESCRIPTION OF THE DRAWINGS

Embodiments will now be described, by way of example only, with reference to the accompanying drawings, in which:
Figure 1 is a schematic representation of a wireless communications network according to an example;
Figure 2 is a flow diagram of an initial operational parameter assignment according to an example; and
Figure 3 is a flow diagram of an operational parameter reassignment according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In current 3GPP Networks one of the issues commonly faced by the network is how to manage overload, especially resulting from events where a significant number of UEs attempt to access network resources simultaneously or within a very short period of time. Access Class Barring is a known mechanism whereby UEs in idle mode can be controlled by the network such that only a limited number can be granted access if the network is congested.

Typical wireless networks use 16 access classes that can be used by the network to limit the number of user equipment, or network connectible devices, which are able to access a radio access network at any particular time. Each user equipment or network connectible device is typically manufactured such that it is associated with one of the basic access classes. That is to say, each user equipment is manufactured to be associated with an access class number between 0 and 9. User equipment may be members of special access classes 10 to 15 only as a result of a service level selected by user equipment. For example, access class 10 is typically always used for emergency calls. If user equipment wishes to operate using a high priority service it may be operable to self-select an access class between 11 and 15. Thus, the basic allocation (0 to 9) to which it was assigned as a result of manufacture may be overridden in the event that user equipment is seeking to support communication according to a service level associated with one or more of access class numbers 11 to 15.

A wireless communication network can use Access Class Barring (ACB) to manage congestion in a network. Access Class Barring may be utilised such that only user equipment or network connectible devices associated with a particular access class may be operable to establish communication with the network. For example, if a network is congested and wishes to only admit approximately 20% of user equipment during a period of congestion, the network may be operable to bar all access classes except 0 and 1. As a result, and assuming that access classes are uniformly distributed amongst user equipment, only approximately 20% or two in ten user equipment may operate such that they request admission to communicate with a network.

Typically, Access Class Barring information can be broadcast in a System Information Broadcast message (SIB) and user equipment operating in idle mode is operable to read such a broadcast message before any attempt to connect to the network. Consequently, user equipment which is aware of its basic access class and the classification of a service which it may be requesting can check the appropriate information within the System Information Broadcast message before attempting to connect to the network.

Access Class Barring is only used for user equipment in idle mode. Once user equipment is in a connected mode (for example, cell_PCH in UMTS) a network is no longer operable to use Access Call Barring to manage those connected user equipment. As a result, the network is not operable to prevent connected user equipment from triggering services, even if the network is experiencing a period of congestion.

According to an example, an access control mechanism to control network access of network connectible devices which are operating in a connected mode is provided. With reference to an access node to which the UE device in question communicates with to access network services, at least one operational parameter (access group) is assigned at the access node to or for a UE device at attachment of the device to the network. The or each operational parameter is selected according to a predetermined distribution for mapping a parameter to a UE.

That is, user equipment is associated with or assigned to an operational parameter in the form of an access group, which can be used by the network to allow control over how many connected mode user equipment may be operable to trigger services. An operational parameter is therefore assigned to user equipment at attachment to the network, that is, when the user equipment first connects to the network. Access groups differ from existing access classes since access classes are not assigned by the Radio Access network, whereas in the case of access group assignment to user equipment this is performed by the network. That is to say, the network can be operable to allocate specific user equipment to specific access groups.

According to an example, an access node of a wireless communications network can determine how to assign Access Groups to UEs when said UEs first access the network. Typically the node is a Radio Network Controller (RNC) for UMTS macro cell networks for example, and as such is normally responsible for managing the level of network load/congestion appropriately.

However the mechanism is also applicable to small cell networks. In such a deployment the access node in question can, for example, be a Home Node B (HNB) which determines the Access Group to assign to a UE when the UE attaches to it. The mechanism can also be implemented across a deployment of HNBs in which case the access node can be a Home Node B Gateway (HNB-GW) which implements the mechanism to allocate an Access Group to a UE when said UE is registered with the HNB-GW by the HNB that the UE is attached to. In this case, HNBs will manage the level of load in the cell that they support and the HNB-GW can manage network load or cell load across HNBs. The information that is provided to the HNB-GW by an HNB as part of the current HNBAP UE registration procedure can allow the HNB-GW to implement the mechanism using some of the capabilities that the UE indicates to the network, for example the Access Stratum Release indicator.

In addition to providing the access node with a mechanism to assign an operational parameter to a UE, the node can be configured to use various distribution techniques (as described below) to assign a plurality of operational parameters to a UE. This can be useful if the network wishes to use a combination of dynamic conditions to manage how connected UEs access services from the network for example, especially if said dynamic conditions are orthogonal to each other. Accordingly, at least one operational parameter is assigned at the access node to or for a UE device at attachment of the device to the network, and the or each operational parameter can be selected according to a predetermined distribution for mapping a parameter to a UE.

In an example, a simple distribution that maps operational parameters to UEs can be a statistical based distribution. For example, the access node can statistically distribute UEs evenly across all Access Groups. Hence the node can then manage the number of UEs that can access services from the network on the basis of a strict percentage of UEs connected to that node for example.

Alternatively, the access node can be configured such that it can distribute UEs across Access Groups based on the likely services that each UE would utilise when connected to the network. For example a correlation can be determined between the 3GPP release supported by the UE, indicated to the access node by each UE in the Access Stratum Release Indicator information element (IE) for example, and the services that such UEs may subsequently request from the network once they are connected. This correlation can then be used to distribute UEs to Access Groups based on the likely load each UE would add to the network when requesting services that were introduced in each specific 3GPP release.

Similarly, other IEs that can be populated when a UE first accesses the network can be used by the access node to assess the likely future load that the UE will place on the network. For example the UE Capability indication IE indicates whether the UE supports HS-DSCH or HS-DSCH+E-DCH channels, which are high rate UMTS channels and hence can imply that a UE supporting either, or both, of these channels will require more resources and place a larger load on the network than a UE that does not support either channel. Alternatively the UE can indicate support for other channels e.g. HS-PDSCH in Cell_FACH, or F-DPCH, or Enhanced F-DPCH etc, all of which can be used by the mechanism to determine the likely services the UE will request from the network, or that the core network will establish to the UE based on the UE's service profile, when the UE is connected to said network. This determination is hence used by the access node to determine a suitable Access Group to assign a UE to when it attaches to the network. The mechanism supports the ability for the operator to tailor the determination appropriately and hence assign a variable weighting to the services that a UE will likely request, thus providing the operator with a flexible solution for assigning UEs to Access Groups.

In another example, the access node can use information provided to it by the UE which indicates the quality of the radio link in the cell being accessed by the UE to determine how to assign the UE to an Access Group. For example a UE that is at the edge of the cell that it is attempting to access will typically measure inferior radio conditions compared to that measured by a UE that is located near the cell centre. Hence a cell edge UE will typically require the access node supporting the relevant cell to increase its transmit power when communicating with said UE, when compared to serving a UE at the cell centre. Such an increase in power may therefore result in an associated increase in the "loading" on the access node when the UE requests services from the network, compared to a UE that is located at the cell centre. Accordingly, these UEs can be allocated to different Access Groups, so that the access node can determine whether it can support a higher load from cell edge UEs if the network, or one or more access nodes, is overloaded.

In another example, the access node can use information about the "mobility" of a UE to determine how to assign an Access Group to the UE. The UE can indicate to the access node whether it has detected high mobility and hence the access node can decide to allocate UEs that have detected High mobility to a different Access Group from those that have not detected high mobility. Such a differentiation can subsequently be used by the access node if the network or cell is overloaded to allow low mobility UEs preferential access compared to those with high mobility on the basis that a highly mobile UE is likely to move quickly to a different cell or to a different access node, which may be less loaded than the current cell.

When considering the mobility of UEs between cells, an operational parameter assigned to a UE can be signalled from the source node to the target node when said UE relocates from one access node to another, such that said target node is able to subsequently manage service requests from that UE.

In addition to the distribution categories described above, the network can utilise a combination of other IEs sent from a UE as a key to determining which Access Group a UE should be assigned to. A combination of one or more of the categories described above can be used when determining a suitable operational parameter assignment.
In an example, an access node can determine whether and how to reassign an Access Group to a UE. For example, should the access node make an initial determination as to which Access Group the UE should be assigned to when that UE initially access the network, it may be that subsequently the access node determines that the initial Access Group ssignment for that UE is incorrect.

As an example, in the case of service based distribution for example, if the expectation based on the services typically requested by a UE with the indicated capabilities prove to be incorrect, i.e. the UE does not request set up of the type of Radio Access Bearer (RAB) normally associated with a UE supporting certain channels, 3GPP release, and so on for example, the access node can reallocate an Access Group for that UE. This determination can include a configurable time period, T, such that the access node assesses whether a RAB that would normally be expected to be requested by a UE with a specific capability has been requested within T or not. If not, the access node can decide to reallocate a new Access Group o that UE. Such a reallocation would typically be when performing an RRC procedure, e.g. Radio Bearer Reconfiguration. When reallocating an Access Group to a UE the access node will indicate that the new Access Group replaces any Access Group that the UE had previously been assigned to. Alternatively if the mechanism has been configured to allow the access node to allocate a plurality of Access Groups to a UE, the access node can indicate to the UE that the new Access Group is to be used in addition to the previously assigned Access Group and also whether the Access Groups should subsequently be used orthogonally or in parallel.

Similarly the access node can reassign operational parameters for a UE when it is provided with additional information relating to that UE, typically from the core network after the UE has attached to the network. An example being when the access node receives a RANAP Common ID message that includes the UESBI-Iu IE, from which the International Mobile Station Equipment Identifier Software Version (IMEISV) for the UE can be derived and hence can be used as by the mechanism to determine whether the currently assigned Access Group for the UE should be reassigned, based on the service profile normally associated with the software version of that UE.

When a UE is relocated from one node to another node its operational parameter can be provided to the said another node, however by introducing the ability for a node to reassign an operational parameter to a UE the proposed mechanism allows for the said another node to reallocate an Access Group to a UE when said UE has been handed in to the said another node. For example, if the said another node determines that the distribution of Access Groups to UEs that it is currently supporting is such that the said UE should be assigned to an Access Group that is different to the one to which it is currently assigned. This might be when the said another node is currently supporting a number of UEs that are all assigned to a small number of Access Groups and hence the said another node may wish to distribute UEs across a larger number of Access Groups.

In an example, one or more Access Groups can be reserved. For example, a proportion of available Access Groups can be reserved for UEs to be assigned to based on a purely statistical distribution as mentioned above, whilst other Access Groups can be reserved for UEs to be assigned to based on mobility considerations as mentioned above for example.

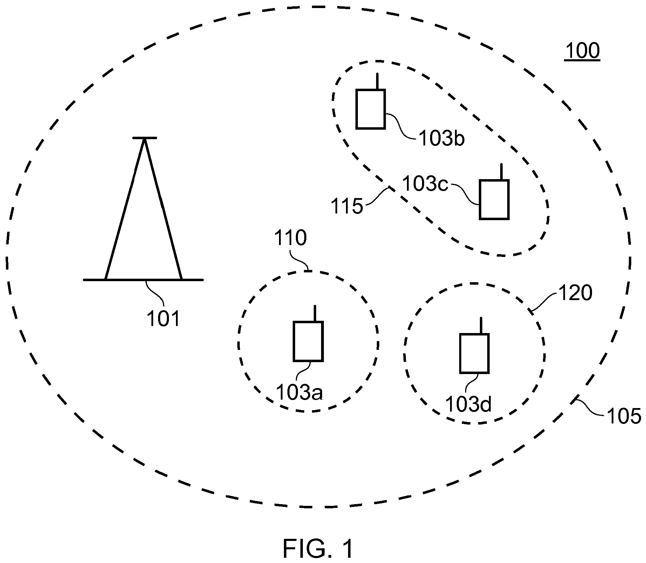

Figure 1 is a schematic representation of a wireless communications network according to an example. Network 100 includes an access node 101 operable to communicate with multiple UE devices 103a-d that are within range of node 101, such as within an area defining a cell 105 of the network 100 that is served by node 101. At attachment to the node 101, UEs 103a-d are assigned operational parameters that are selected according to a predetermined distribution for mapping a parameter to a UE as described above. For example, UE 103a can be assigned to an access group 110 based on a service (data rate) based distribution relating to the services that UE 103a may potentially request from network 100 via node 101. UEs 103b,d can be assigned to an access group 115 based on a statistical distribution, and UE 103d can be assigned to an access group 120 based on a mobility based distribution.

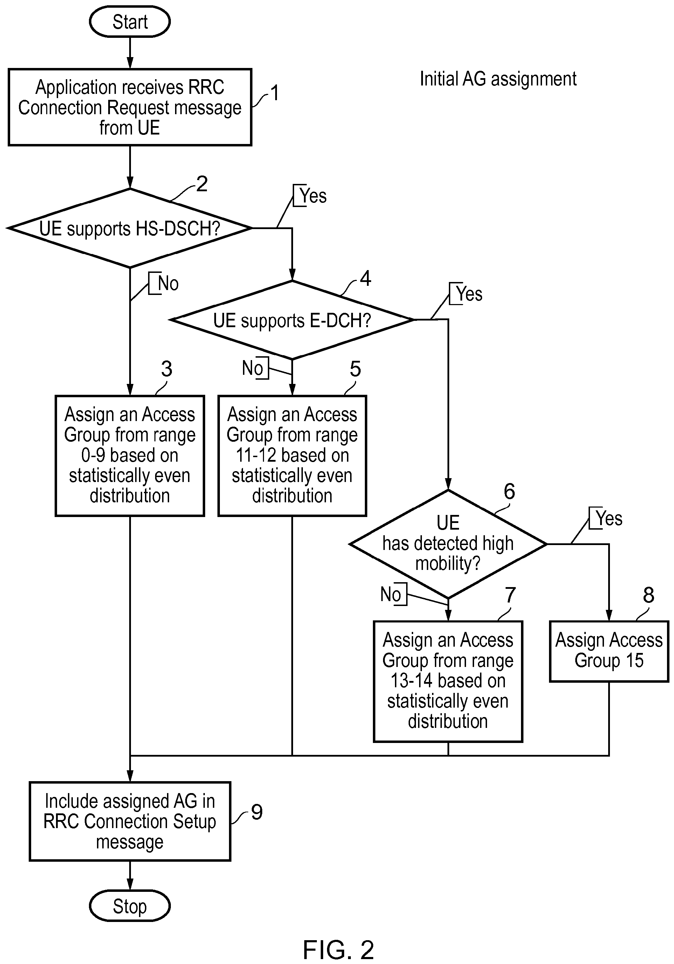

Figure 2 is a flow diagram of an initial operational parameter assignment according to an example. In the example of figure 2, and with reference to figure 1, an operator has configured an access node 101 to determine a single Access Group for each UE based on a plurality of distributions. In this example the distributions considered are whether the UE supports a high data rate channel or not, whether the UE has detected high mobility or not and a statistical distribution. It will be appreciated that other combinations are possible.

At block 1, an access node 101 receives an RRC Connection Request message from a UE 103a-d which contains information on the UE's capabilities via various IEs in the message. At block 2, the access node 101 checks whether the UE has indicated whether it is HS-DSCH capable or not. If not, the UE is assigned an Access Group from the range 0-9 in block 3, the actual group chosen so as to evenly distribute UEs across those Access Groups. If the UE has indicated that it is HS-DSCH capable, the access node 101 checks whether it has also indicated that it is E-DCH capable in block 4. If the UE is not E-DCH capable the access node allocates an Access Group from the range 11-12 in block 5, again allocating the actual Access Group on the basis of a statistical even distribution. If the UE is E-DCH capable the access node determines whether the UE has detected high mobility or not in block 6. If the UE has not detected high mobility it is allocated an Access Group from the range 13-14 in block 7. If the UE has detected high mobility it is allocated an Access Group 15 at block 8. At block 9, the assigned Access Group for the UE is included in an RRC Connection Setup message. Thus the access node 101 is able to intelligently allocate UEs to a wide range of Access Groups, based on the capability information that the UE has indicated to the access node. It will be appreciated that any combination of distributions is possible and is configurable by the operator.

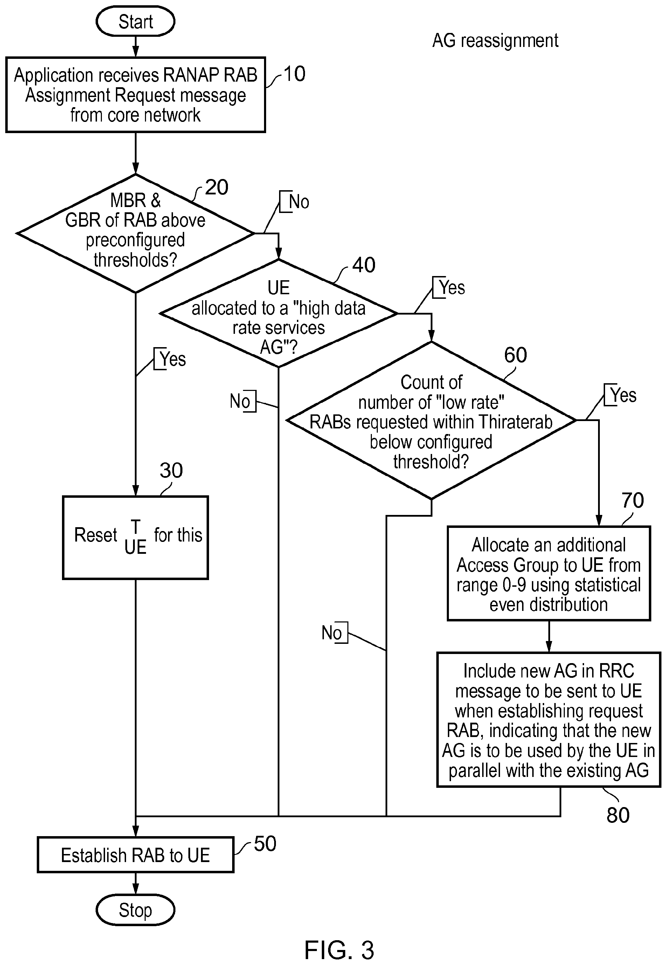

Figure 3 is a flow diagram of an operational parameter reassignment according to an example. In the example of figure 3, and with reference to figure 1, the network 100 can allocate two Access Groups to a UE.

In block 10, the access node 101 receives a RAB Assignment Request from the core network (not shown). The access node determines from the message whether the Maximum & Guaranteed Bit Rates for the RAB are above configured thresholds, i.e. is this a "high data rate" RAB? (block 20). If so, the access node resets timer T (block 30) and establishes the RAB to the UE in block 50. If not, the access node determines whether the UE has previously been allocated to a "high data rate services" Access Group in block 40. If not, the access node establishes the RAB to the UE in block 50. If the UE has been allocated to a "high data rate services" Access Group, the access node then determines (block 60) the number of "low rate" RABs that have been requested for the access node establishes the RAB to the UE (block 50). If the count of "low rate" RABs within T is above the configured threshold the access node determines that the UE has not requested the number of "high data rate RABs" that would typically have been requested by a UE supporting the capabilities that it indicated to the network when it attached. Hence the access node allocates an additional Access Group to the UE in block 70. This new Access Group is included in the RRC message sent to the UE when the access node establishes the RAB (block 80) and the access node then establishes the RAB to the UE (block 50). The access node indicates to the UE in this example that the new Access Group should be used in addition to the previously allocated Access Group.

According to an example therefore, the network can determine how to allocate UEs to Access Groups using a configurable and flexible solution such that a number of factors can be used when deciding how to assign an Access Group to a UE. The terms operational parameter and Access Group are used interchangeably herein. That is, an Access Group is an operational parameter according to an example.

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. A user equipment, UE, control method performed by a network access node (101) for UE operable to communicate with the network access node (101) in a wireless communications network (100), the method comprising:
receiving a mobility measure, from a UE, that indicates whether the UE is a high mobility UE; assigning an operational parameter at the network access node to the UE at attachment of the UE to the wireless communications network (100) via the network access node (101) on the basis of said mobility measure, the operational parameter selected according to a predetermined distribution for mapping the operational parameter to a UE,
wherein the operational parameter is an access group suitable for managing UE access to the network access node (101).

2. A control method as claimed in claim 1, wherein the operational parameter is selected according to one or more UE capabilities derived using one or more information elements provided by the UE to the network.

3. A control method as claimed in claim 1, further comprising using the predetermined distribution to map the UE to an access group based on network services that the UE can utilise as derived from the device capabilities.

4. A control method as claimed in claim 3, further comprising using an access stratum release indicator transmitted by the UE to determine services that the UE can utilise.

5. A control method as claimed in claim 1, further comprising assigning the operational parameter on the basis of a statistical distribution, whereby to evenly distribute UEs across available access groups.

6. A control method as claimed in any preceding claim, further comprising managing access to network services for groups of UEs connected to the access node by using the operational parameter assigned to the UE to govern access to a network service.

7. control method as claimed in any preceding claim, further comprising reassigning the operational parameter to or for the UE device.

8. A control method as claimed in claim 7 wherein reassigning the operational parameter includes determining whether the UE has requested setup of a radio access bearer for a channel associated with a service to which the assigned operational parameter relates.

9. A control method as claimed in claim 7 wherein reassigning the operational parameter includes using an information element provided by the UE or other nodes within the network after attachment to the network to determine a service profile of the UE.

10. A network access node (101) in a wireless communications network (100), the network access node configured to:
receive a mobility measure, from a UE, that indicates whether the UE is a high mobility UE; and assign an operational parameter to the UE at attachment of the UE to the wireless communications network (100) via the network access node (101) on the basis of said mobility measure, the operational parameter is selected according to a predetermined distribution for mapping the operational parameter to a UE,
wherein the operational parameter is an access group suitable for managing UE access to the network access node.

11. A network access node (101) as claimed in claim 10 wherein the network access node is a radio network controller or a home node B, HNB, or a HNB gateway.

12. A network access node (101) as claimed in claim 10 or 11 wherein the network access node is configured to reassign the operational parameter to the UE

13. A computer program product, comprising a computer usable medium having computer readable program code embodied therein, said computer readable program code when run in a network access node, causes said network access node to perform the method as defined in any of claims 1 to 9.

## Patentansprüche

1. Teilnehmereinrichtungs(UE)-Steuerverfahren, das von einem Netzwerkzugangsknoten (101) für die UE durchgeführt wird, die betreibbar ist, mit dem Netzwerkzugangsknoten (101) in einem drahtlosen Kommunikationsnetzwerk (100) zu kommunizieren, wobei das Verfahren Folgendes umfasst:
Empfangen eines Mobilitätsmaßes von einer UE, das anzeigt, ob die UE eine UE hoher Mobilität ist;
Zuweisen eines Betriebsparameters am Netzwerkzugangsknoten zur UE beim Anbinden der UE an das drahtlose Kommunikationsnetzwerk (100) via den Netzwerkzugangsknoten (101) auf Basis des Mobilitätsmaßes, wobei der Betriebsparameter gemäß einer vorbestimmten Verteilung für das Zuordnen des Betriebsparameters zu einer UE ausgewählt wird,
wobei der Betriebsparameter eine Zugangsgruppe ist, die zum Verwalten eines UE-Zugangs zum Netzwerkzugangsknoten (101) geeignet ist.

2. Steuerverfahren nach Anspruch 1, wobei der Betriebsparameter gemäß einer oder mehreren UE-Fähigkeiten ausgewählt wird, die unter Verwendung von einem oder mehreren Informationselementen abgeleitet werden, die dem Netzwerk durch die UE bereitgestellt werden.

3. Steuerverfahren nach Anspruch 1, das ferner das Verwenden der vorbestimmten Verteilung, um die UE auf Basis von Netzwerkdiensten, die die UE nutzen kann, wie aus den Vorrichtungsfähigkeiten abgeleitet, einer Zugangsgruppe zuzuordnen, umfasst.

4. Steuerverfahren nach Anspruch 3, das ferner das Verwenden eines Zugangsschichtfreigabeindikators, der von der UE übertragen wird, um Dienste zu bestimmen, die die UE nutzen kann, umfasst.

5. Steuerverfahren nach Anspruch 1, das ferner das Zuweisen des Betriebsparameters auf Basis einer statistischen Verteilung umfasst, wodurch UEs gleichmäßig auf verfügbare Zugangsgruppen verteilt werden sollen.

6. Steuerverfahren nach einem der vorhergehenden Ansprüche, das ferner das Verwalten des Zugangs zu Netzwerkdiensten für Gruppen von UEs, die mit dem Zugangsknoten verbunden sind, durch Verwenden des Betriebsparameters, der der UE zugewiesen ist, um den Zugang zu einem Netzwerkdienst zu regeln, umfasst.

7. Steuerverfahren nach einem der vorhergehenden Ansprüche, das ferner das Neuzuweisen des Betriebsparameters zu oder für die UE-Vorrichtung umfasst.

8. Steuerverfahren nach Anspruch 7, wobei das Neuzuweisen des Betriebsparameters das Bestimmen, ob die UE die Einrichtung eines Funkzugangsträgers für einen Kanal angefordert hat, der mit einem Dienst verknüpft ist, den der zugewiesene Betriebsparameter betrifft, beinhaltet.

9. Steuerverfahren nach Anspruch 7, wobei das Neuzuweisen des Betriebsparameters das Verwenden eines Informationselements, das von der UE oder anderen Knoten im Netzwerk nach der Anbindung an das Netzwerk bereitgestellt wird, um ein Dienstprofil der UE zu bestimmen, beinhaltet.

10. Netzwerkzugangsknoten (101) in einem drahtlosen Kommunikationsnetzwerk (100), wobei der Netzwerkzugangsknoten zu Folgendem ausgelegt ist:
Empfangen eines Mobilitätsmaßes von einer UE, das anzeigt, ob die UE eine UE hoher Mobilität ist; und
Zuweisen eines Betriebsparameters zur UE beim Anbinden der UE an das drahtlose Kommunikationsnetzwerk (100) via den Netzwerkzugangsknoten (101) auf Basis des Mobilitätsmaßes, wobei der Betriebsparameter gemäß einer vorbestimmten Verteilung für das Zuordnen des Betriebsparameters zu einer UE ausgewählt wird,
wobei der Betriebsparameter eine Zugangsgruppe ist, die zum Verwalten eines UE-Zugangs zum Netzwerkzugangsknoten geeignet ist.

11. Netzwerkzugangsknoten (101) nach Anspruch 10, wobei der Netzwerkzugangsknoten eine Funknetzwerksteuerung oder ein Heimknoten B, HNB, oder ein HNB-Gateway ist.

12. Netzwerkzugangsknoten (101) nach Anspruch 10 oder 11, wobei der Netzwerkzugangsknoten dazu ausgelegt ist, der UE den Betriebsparameter neu zuzuweisen.

13. Computerprogrammprodukt, das ein von einem Computer verwendbares Medium umfasst, auf dem sich computerlesbarer Programmcode befindet, wobei der computerlesbare Programmcode, wenn er in einem Netzwerkzugangsknoten ausgeführt wird, den Netzwerkzugangsknoten veranlasst, das Verfahren nach einem der Ansprüche 1 bis 9 durchzuführen.

## Revendications

1. Procédé de commande d'équipement utilisateur, UE, effectué par un nœud d'accès au réseau (101) pour un UE exploitable pour communiquer avec le nœud d'accès au réseau (101) dans un réseau de communications sans fil (100), le procédé comprenant :
la réception d'une mesure de mobilité, en provenance d'un UE, qui indique si l'UE est un UE à mobilité élevée ;
l'assignation d'un paramètre opérationnel au niveau du nœud d'accès au réseau à l'UE lors du rattachement de l'UE au réseau de communications sans fil (100) via le nœud d'accès au réseau (101) sur la base de ladite mesure de mobilité, le paramètre opérationnel étant sélectionné selon une répartition prédéterminée pour mapper le paramètre opérationnel sur un UE,
dans lequel le paramètre opérationnel est un groupe d'accès approprié pour gérer un accès d'UE au nœud d'accès au réseau (101).

2. Procédé de commande selon la revendication 1, dans lequel le paramètre opérationnel est sélectionné selon une ou plusieurs capacités d'UE dérivées en utilisant un ou plusieurs éléments d'information fournis par l'UE au réseau.

3. Procédé de commande selon la revendication 1, comprenant en outre l'utilisation de la répartition prédéterminée pour mapper l'UE sur un groupe d'accès sur la base de services de réseau que l'UE peut utiliser comme dérivé des capacités de dispositif.

4. Procédé de commande selon la revendication 3, comprenant en outre l'utilisation d'un indicateur de libération de strate d'accès transmis par l'UE pour déterminer des services que l'UE peut utiliser.

5. Procédé de commande selon la revendication 1, comprenant en outre l'assignation du paramètre opérationnel sur la base d'une répartition statistique, ce qui permet de répartir uniformément des UE entre des groupes d'accès disponibles.

6. Procédé de commande selon une quelconque revendication précédente, comprenant en outre la gestion de l'accès à des services de réseau pour des groupes d'UE connectés au nœud d'accès en utilisant le paramètre opérationnel assigné à l'UE pour régir l'accès à un service de réseau.

7. Procédé de commande selon une quelconque revendication précédente, comprenant en outre la réassignation du paramètre opérationnel à ou pour le dispositif UE.

8. Procédé de commande selon la revendication 7, dans lequel la réassignation du paramètre opérationnel inclut la détermination de si l'UE a demandé l'établissement d'un support d'accès radio pour un canal associé à un service auquel se rapporte le paramètre opérationnel assigné.

9. Procédé de commande selon la revendication 7, dans lequel la réassignation du paramètre opérationnel inclut l'utilisation d'un élément d'information fourni par l'UE ou d'autres nœuds au sein du réseau après le rattachement au réseau pour déterminer un profil de service de l'UE.

10. Nœud d'accès au réseau (101) dans un réseau de communications sans fil (100), le nœud d'accès au réseau étant configuré pour :
recevoir une mesure de mobilité, en provenance d'un UE, qui indique si l'UE est un UE à mobilité élevée ; et
assigner un paramètre opérationnel à l'UE lors du rattachement de l'UE au réseau de communications sans fil (100) via le nœud d'accès au réseau (101) sur la base de ladite mesure de mobilité, le paramètre opérationnel est sélectionné selon une répartition prédéterminée pour mapper le paramètre opérationnel sur un UE,
dans lequel le paramètre opérationnel est un groupe d'accès approprié pour gérer un accès d'UE au nœud d'accès au réseau.

11. Nœud d'accès au réseau (101) selon la revendication 10, dans lequel le nœud d'accès au réseau est un contrôleur de réseau radio ou un nœud B domestique, HNB, ou une passerelle HNB.

12. Nœud d'accès au réseau (101) selon la revendication 10 ou 11, dans lequel le nœud d'accès au réseau est configuré pour réassigner le paramètre opérationnel à l'UE.

13. Produit de programme informatique, comprenant un support utilisable par ordinateur dans lequel est incorporé un code de programme lisible par ordinateur, ledit code de programme lisible par ordinateur, lorsqu'il est exécuté dans un nœud d'accès au réseau, amène ledit nœud d'accès au réseau à effectuer le procédé selon l'une quelconque des revendications 1 à 9.
